Europäisches Patentamt

European Patent Office

Office européen des brevets

(11) Publication number: **0 305 141**
**A1**

## (12) EUROPEAN PATENT APPLICATION

(21) Application number: 88307785.1

(22) Date of filing: 23.08.88

(51) Int. Cl.⁴: **G02B 6/06** , **G02B 13/00**

(30) Priority: 26.08.87 GB 8720116

(43) Date of publication of application:
01.03.89 Bulletin 89/09

(84) Designated Contracting States:
AT BE CH DE FR GB IT LI LU NL SE

(71) Applicant: **AMERSHAM INTERNATIONAL plc**
**Amersham Place**
**Little Chalfont Buckinghamshire HP7**
**9NA(GB)**

(72) Inventor: **Finlan, Martin Francis**
**7, Ballard Close**
**Aylesbury Buckinghamshire(GB)**
Inventor: **Morse, John**
**Amersham Place**
**Little Chalfont Buckinghamshire(GB)**
Inventor: **Harvey, Richard Paul**
**102, Woodside Road**
**Amersham Buckinghamshire(GB)**

(74) Representative: **Boydell, John Christopher et**
**al**
**Stevens, Hewlett & Perkins 5 Quality Court**
**Chancery Lane**
**London, WC2A 1HZ(GB)**

(54) **Optical system.**

(57) An optical system for scientific instruments
where a low light level has to be amplified for
subsequent processing. The system comprises a
compound lens 4 having a convex output surface 5
to which is bonded a length of fibre optic 6. The
input surface of the fibre optic is ground to a curvature corresponding to that of the image plane of
the lens. The output from fibre optic 6 is passed to a
camera 2. Light from an object (not shown) passes
through the lens 4 and fibre optic 6 onto the light
sensitive surface of the camera 2. The use of the
fibre optic in the manner described ensures efficient
transfer of light energy from the output of the lens to
the camera with minimum distortion.

FIG.1

## OPTICAL SYSTEM

This invention relates to an optical system, particularly for use in scientific instruments and similar applications where a low light level is to be amplified for subsequent processing.

Particularly in the field of microbiology, there are an increasing number of applications for low light output imaging devices from large area objects. An example is the imaging of the distribution of radioactivity in a plate or slice by conversion to light output, or alternatively, and more directly, in a move away from radioactivity to fluorescent and luminescent analysis and assay systems. In these applications, the large area object to be imaged can range from a micro-titre plate which does not need particularly good resolution, but does need a measure of the quantity of light output, to a luminescent or fluorescent blot or sequencing gel or similar, which requires both good resolution and a measure of the quantity of light output.

The imager - that element upon which the light from the object is imaged in order to amplify same - has a light sensitive surface whose area is limited in size by current technology. Thus it is necessary, for objects whose size is larger than this, to incorporate some form of image reduction unit to bring the image size down to that which can be completely covered by the imager. It is this image reduction unit which is the subject of the present invention.

The problem is to capture as much light as possible without introducing aberrations, or losing resolution. A lens can be used to image the light output onto the imager, but the effective numerical aperture and hence the light input to the lens is limited by the effects of internal reflection at the output surface of the lens. Thus, the field of view of the lens is limited, and the object must be placed further away from the lens in order to enable it to be successfully imaged, and this reduces the amount of light potentially collectable by the lens. A further problem limiting the numerical aperture is that the imager will usually require a flat planar image; if a curved image plane is acceptable, then a higher numerical aperture can be achieved.

In accordance with the present invention, a lens is used to effect an image size reduction, and a fibre optic coupler is placed between the output of the lens and the imager. The fibre optic coupler presents a curved, normally concave, surface to the lens in order to transfer the curved image presented at the lens output to a flat planar image for application to the imager. By this means, the lens can be designed to have a curved output image and thus enhanced numerical aperture.

That surface of the fibre optic which faces the lens is formed in such a way as to line up with the image plane at the lens output. The fibre optic is positioned so that this curved input surface is coincident with the image plane to thereby perfectly couple every point on the image plane into the fibre optic. Preferably, the lens is designed such that its image plane corresponds with the physical curved, normally convex, output face of the lens, in which case the fibre optic may be correctly positioned simply by being bonded directly to the lens face, for example using an optical cement. The opposite (output) face of the fibre optic is flat planar to correspond with the imager surface.

In an embodiment of the invention, a tapered fibre optic may be used to transfer light from a particularly charge-area object to the lens input. Indeed, a tapered fibre optic might be usable to transfer light from the object to the imager without the use of the optical system of the present invention; however, as will be explained, tapered fibre optics present a number of problems, principally poor resolution and high cost.

In order that the invention may be better understood, an embodiment thereof will now be described by way of example only and with reference to the accompanying drawings in which:-

Figure 1 is a diagrammatic side view of an embodiment of an optical system according to the invention;

Figure 2 is a diagram of the computed ray paths to the output face of the lens in the optical system of Figure 1;

Figure 3 is an enlarged diagram showing the construction of a fibre optic; and

Figure 4 is a diagram illustrating the ray paths within a tapered fibre optic.

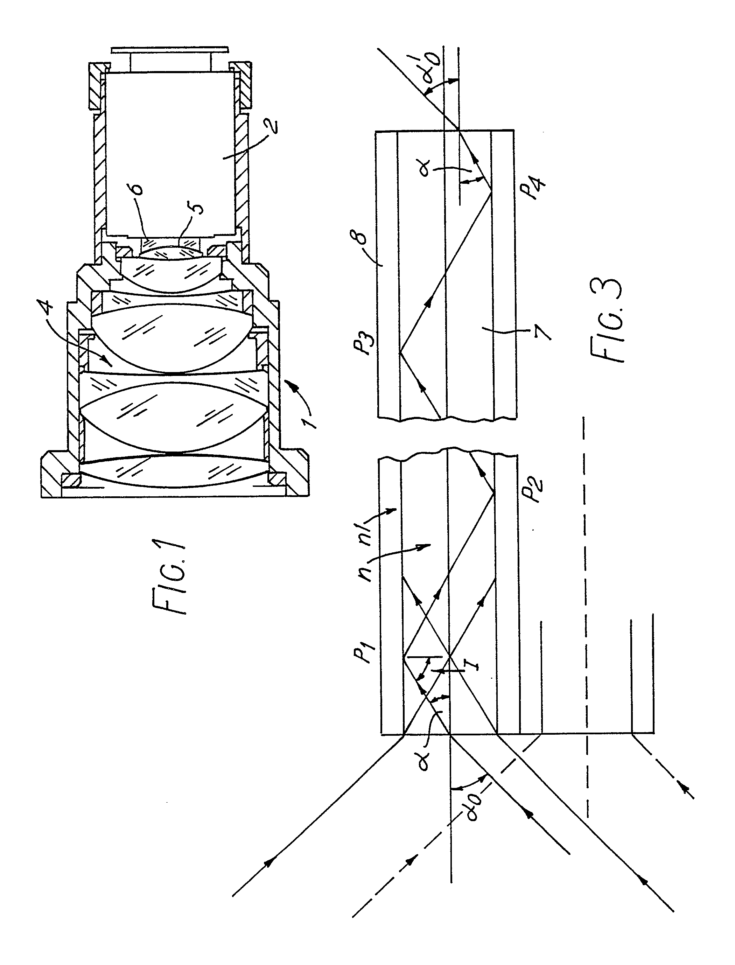

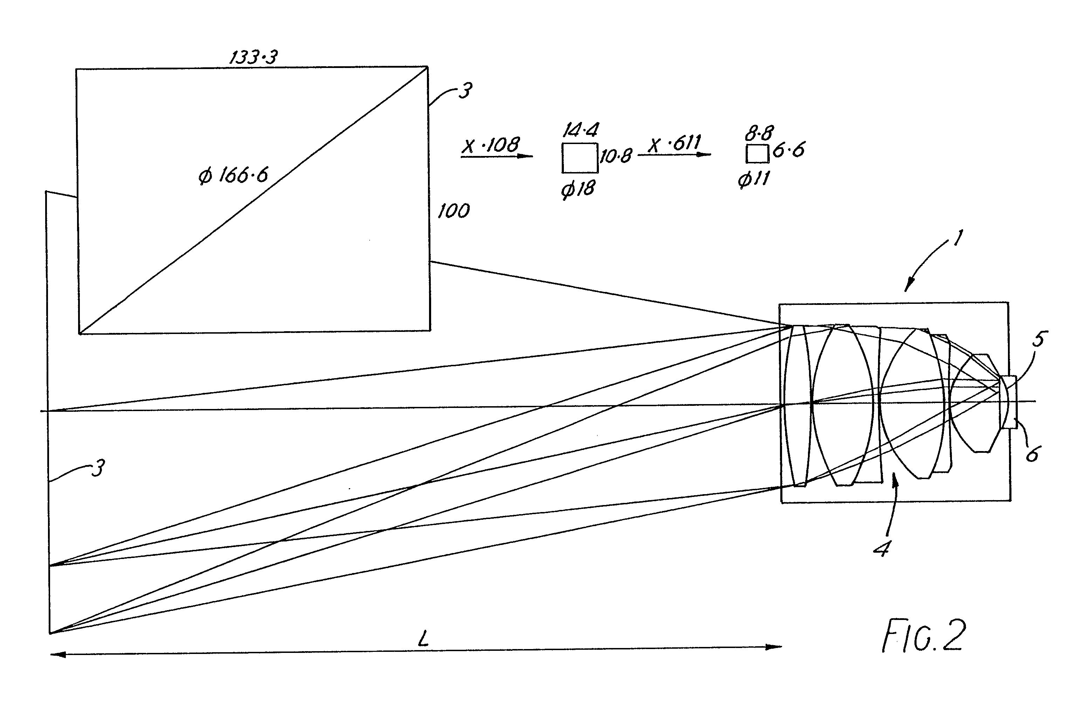

Referring firstly to Figures 1 and 2, there is shown an optical system 1 for providing a reduced size image of an object on the light sensitive surface of a light detector such as a camera 2. The object is of the large area type, such as a biological specimen of the kind discussed above, and is represented in Figure 2 by the single line 3.

The optical system comprises a compound lens 4 having a convex output surface 5 to which is bonded by means of an optical cement a short length of fibre optic 6. The fibre optic 6 has a left hand (input) surface which is ground to a curvature corresponding to that of the image plane which latter is in this case coincident with the surface 5. The right hand (output) surface is flat and is in face to face contact with the flat light sensitive surface of the camera 2.

A fibre optic is made from a stack of clad glass fibres fused together at high temperature. The cladding acts to bond together the fibres during the fusion process, and also acts to optically isolate adjacent fibres from one another. After fusing, the fibre optic is subject to a drawing operation to reduce the diameter to a required size. The fibre optic may be used as a long length, or may be cut into short lengths to form cylindrical blocks, for example, for use as windows in various forms of electro-optical image tubes. The fibre optics so formed have the property that light introduced at any one position in a cut end of the fibre optic will appear at the corresponding position at the other end of the fibre optic.

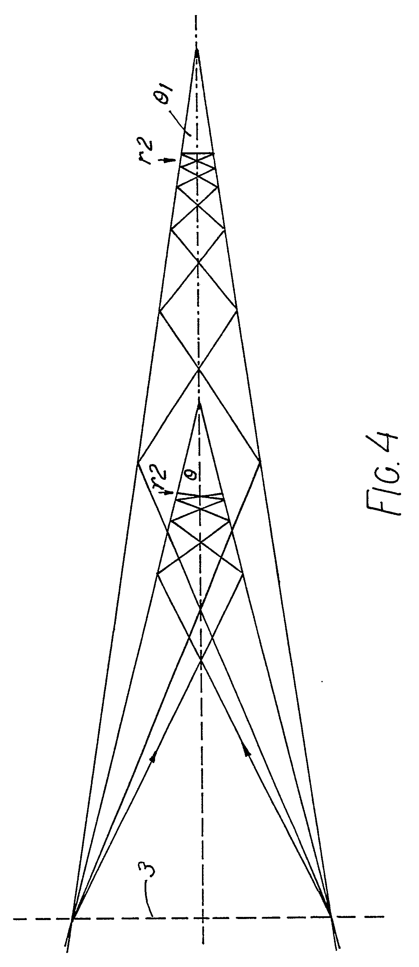

Figure 3 is a diagrammatic sectional view through a fibre optic showing just one fibre, and part of another, for illustration. The glass fibre itself is the central part, shown under reference 7 and the cladding is shown under reference 8. As shown by the ray diagrams, light travels along the fibre optic by successive internal reflections P1 to P4 off the internal wall of the cladding.

Practical optical fibre blocks are made up of 6 micron minimum diameter fibres, clad with a lower refractive index glass and fused together as described above to make a cylindrical block. The best resolution for such a block is about twice the fibre diameter i.e. about 10 microns. For blocks in series, the resolution is approximately $R/N^{0.5}$, where N is the number of blocks.

The Numerical Aperture (NA) is a quantity which may be used to define the performance both of the compound lens and the fibre optic. For a fibre, $NA = (n^2-n1^2)^{0.5}$ where n is the refractive index of the core glass 7 and n1 that of the cladding 8. Typically, n = 1.70 and n1 = 1.52 giving an NA of 0.8. This is equivalent to a lens of F/0.6 and to a cone angle of 106 degrees. The NA of the emergent cone is the same as the entry cone. Light which enters outside this cone will not be transmitted. To achieve the quoted resolution, the object must be in intimate contact with the fibres. The resolution worsens by a factor of about 2 for each 5 microns displacement from the face of the block. The distance D travelled along the fibre between successive reflections is given by:-

$$D = d/\tan\alpha$$

where d is the diameter of the fibre core. Scattering is the major cause of loss, as volume absorption is negligible. The increased path length due to reflections is trivial - usually < 10%. The difference in time of flight is significant only for phase relationships. Transmission for one short fibre bundle is about 50% due to these factors and to the 70% maximum packing fraction. If bundles are put in series, about 30% is lost at each interface, and the resolution is reduced by about 30%. With input fibre diameters in the region of 10 microns to give a resolution of about 25 microns, the post interface resolution would be about 36 microns.

The camera 2 comprises a light intensifier bonded to a microchannel plate amplifier which is itself coupled to a ccd camera. A suitable unit is English Electric type P8650 intensified ccd image sensor. The size of the light sensitive area is limited by currently available technology. For example charge coupled devides (CCD's) are currently difficult to make in sizes larger than about 10 mm by 10 mm. Cost is also a significant factor because it is usually necessary to use microchannel plate, fibre optic intensifier or some combination of these to put the image onto a CCD or vidicon camera, and the cost of these devices is substantial, particularly in the larger sizes. There is therefore a size which, in conjunction with the cost of the image reduction unit herein described gives the lowest overall cost.

The lens 4 is a compound lens which, although using known technology, is specially designed for this application. The numerical aperture of the lens is $\mu \sin \alpha$ where $\mu$ is the index of refraction of the medium (usually air) between the object and the object lens and $\alpha$ is the angle subtended at the image plane by the diameter of the object (input) lens. A lens has been developed giving a numerical aperture NA of about 1 in the image plane. The f number is 0.45, with a focal length of 30 mm and an input aperture of 66 mm. The lens has been designed to give acceptable image resolution, and suitably low readings for common lens distortions: astigmatism, pincushion and barrel distortion, vignetting and chromatic aberration. Typical ray paths are illustrated in Figure 2. The length L in the illustrated arrangement is 278 mm.

The limiting factor is the advent of total internal reflection on the rear face 5 of the lens. Rays from beyond the largest object dimension given will suffer from total internal reflection and will thus not be transmitted. It will be seen that a larger object will have to be moved further away from the lens if the whole object surface is to be viewed. Each point on the object is represented by a respective point on the rear surface 5 of the lens 4 and the arrangement is such that the fibre optic covers the whole area of the surface 5 containing the image and can thus transmit the whole image to the camera to provide at the camera sensitive surface an acceptably distortion free image with a good numerical aperture.

With the illustrated object size of approximately 130 mm by 100 mm and a light sensitive surface in the region of 18 mm diameter, the size reduction of object to real image is about 10 to 1. The dimensions of objects to be imaged typically varies from gels in the region of 300 mm by 150 mm to microtitre plates and blots which can be as small as 70 mm by 110 mm.

In an alternative embodiment (not illustrated) a tapered light guide is interposed between the object 3 and the lens 4 (Figure 2) to carry light from the object to the lens input, and thus ensure that as little light as possible is lost. For example, for this purpose, a tapered fibre optic which, in the illustrated example, tapers from the object size of 130 x 100 mm to the lens input aperture size of 66 mm may be used.

Tapered fibre optics are constructed from clad fibre optics in the manner described above, but during the drawing operation a taper is introduced so that the input cross sectional area is different from the output cross sectional area.

The cost of these devices is substantial but, provided resolution is not a problem, can be used to direct light to the lens 4 or even to replace the optical system 1 altogether. The light guides used can be either an internally reflective tapered honeycomb or a tapered fibre optic. The limit to the reduction in size of the image which can be produced by this method is defined by the acceptable length of the tapered optic, and the light transmission is 50% or less if a fibre optic is used. Resolution is poor unless the object is placed on the input surface of the taper unit. Even then, the fibre diameter must be greater than about 6 microns to avoid waveguide effects.

Referring to Figure 4, the effect of the cumulative addition of the taper angle of a tapered fibre optic on the angle at which the light hits the side of the taper is illustrated. The object is shown as dotted line 3, and two profiles are shown: the shorter subtends an angle $\theta$ at its apex; the longer an angle $\theta_1$ . The drawing shows that, in both cases, at some point the light is reflected back out even if the taper is totally reflective. For a practical device to have a linear reduction of just over one tenth, (i.e. to replace the optical system 1 completely) the taper angle needs to be less than 0.6 degrees to give a length of 472.4 mm. The number of reflections would be a minimum of 75. The effect of earlier loss of total internal reflection in a tapered optical fibre exacerbates this problem.

This can be put another way in terms of the numerical aperture. The numerical aperture (NA) for tapered fibre optic is given by:-
$(r2/r1) (n^2-n1^2)^{0.5}$
where r1 is the input and r2 is the output radius. For typical values for n = 1.7 and n1 = 1.52, and for r1 = 1/3 times r1, this comes to 0.1856 = sin $\alpha$. Angle $\alpha$ is thus 10.7 degrees. This approach would be beneficial for the imaging of microtitre plates in reducing cross-talk between wells.

The image reduction unit described above enables imaging to be achieved with high aperture and resolution with low spatial aberration. It is designed to transfer the maximum potential light from the object to the camera with a linear reduction of about 10:1.

## Claims

1. An optical system comprising a lens and a fibre optic coupler placed to transmit radiation emerging from the output of the lens, the input surface of the fibre optic coupler having a shape matching that of the output surface of the lens whereby the image presented at the lens output is transferred without distortion to the fibre optic coupler.

2. An optical system as claimed in Claim 1 wherein the fibre optic is positioned in such a way with respect to the lens, and wherein its input surface is curved in such a way that the input surface is coincident with the image plane of the lens.

3. An optical system as claimed in Claim 2 wherein the lens is designed such that its image plane is coincident with the physical curved output face of the lens, and wherein the fibre optic coupler is positioned against the lens such that its input face touches the output face of the lens.

4. An optical system as claimed in Claim 3 wherein the fibre optic coupler is bonded to the output face of the lens.

5. An optical system as claimed in any one of the preceding claims further comprising a tapered fibre optic positioned at the input of the lens in order to couple radiation from a source to the lens input.

FIG.1

FIG.3

EP 0 305 141 A1

133·3

φ166·6

3

100

X·108 →

14·4
□10·8
φ18

X·611 →

8·8
□6·6
φ11

1

5

6

4

3

L

FIG.2

EP 0 305 141 A1

FIG. 4

EP 0 305 141 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 141 556 (PILKINGTON P.E. LTD) <br> * Figure 1; page 1, lines 5-40; page 2, lines 5,6; page 3, lines 32-34 * | 1-4 | G 02 B 6/06 <br> G 02 B 13/00 |
| Y | US-A-3 961 188 (BARRETT) <br> * Figure 1; column 5, lines 24-26 * | 1-4 | |
| A | GB-A-1 333 185 (RANK ORGANISATION LTD) <br> * Whole document * | 1-4 | |
| A | OPTICA ACTA, vol. 1, no. 4, February 1955, pages 164-170; H.H. HOPKINS et al.: "Transparent fibres for the transmission of optical images" <br> * Page 170, column 2, lines 1-40 * | 5 | |
| A | DE-A-2 634 370 (PILKINGTON P.E. LTD) <br> * Figures 1-8 * | 1 | |

### TECHNICAL FIELDS SEARCHED (Int. Cl.4)

G 02 B 6/06
G 02 B 6/30
G 02 B 6/32
G 02 B 13/00
G 02 B 13/16
G 01 T 1/164
G 01 T 1/20

The present search report has been drawn up for all claims

| Place of search | Date of completion of the search | Examiner |
|---|---|---|
| THE HAGUE | 10-11-1988 | WESBY P.B. |